Europäisches Patentamt

European Patent Office

Office européen des brevets

(19)

(11) **EP 0 803 667 B1**

(12) **EUROPEAN PATENT SPECIFICATION**

(45) Date of publication and mention
of the grant of the patent:
**27.11.2002 Bulletin 2002/48**

(51) Int Cl.[7]: **F16J 15/34**

(21) Application number: **96302877.4**

(22) Date of filing: **25.04.1996**

(54) **Sealing device for a Lysholm compressor**

Abdichtung für einen Schraubenverdichter

Joint d'étanchéité pour un compresseur à vis

(84) Designated Contracting States:
**DE FR GB**

(43) Date of publication of application:
**29.10.1997 Bulletin 1997/44**

(73) Proprietor: **ISHIKAWAJIMA-HARIMA
JUKOGYO KABUSHIKI KAISHA
Chiyoda-ku Tokyo-to (JP)**

(72) Inventors:
• **Takabe, Shigeru
Sagamihara-shi, Kanagawa-ken (JP)**
• **Takei, Nobuo
Urayasu-shi, Chiba-ken (JP)**
• **Kobayashi, Takashi
Mitaka-shi, Tokyo-to (JP)**

(74) Representative: **Jennings, Nigel Robin et al
KILBURN & STRODE
20 Red Lion Street
London WC1R 4PJ (GB)**

(56) References cited:
• **PATENT ABSTRACTS OF JAPAN vol. 14, no. 583
(M-1064), 26 December 1990 & JP-A-02 253064
(EAGLE IND.), 11 October 1990,**
• **PATENT ABSTRACTS OF JAPAN vol. 10, no. 161
(C-352), 10 June 1986 & JP-A-61 014278 (IIGURU
KOGYO), 22 January 1986,**

EP 0 803 667 B1

## Description

The present invention relates to a sealing device for a Lysholm compressor for use in sealing the rotor shaft of the compressor.

Figures 1 to 7 relate to a known Lysholm compressor with a known sealing device. In Figures 1 to 7:

Figure 1 is a schematic perspective view of a Lysholm compressor;

Figure 2 is a longitudinal cross-sectional view of the compressor;

Figure 3 is an enlarged cross-sectional view of one of the sealing devices of the compressor;

Figure 4 is a front view showing the belt transmission system;

Figure 5 is an enlarged cross-sectional view showing the contact condition of a sealing ring with a maintaining ring;

Figure 6 is an enlarged cross-sectional view of the sealing ring after a blister has occurred; and

Figure 7 is an enlarged cross-sectional view showing the contact condition of the blistered sealing ring with the maintaining ring.

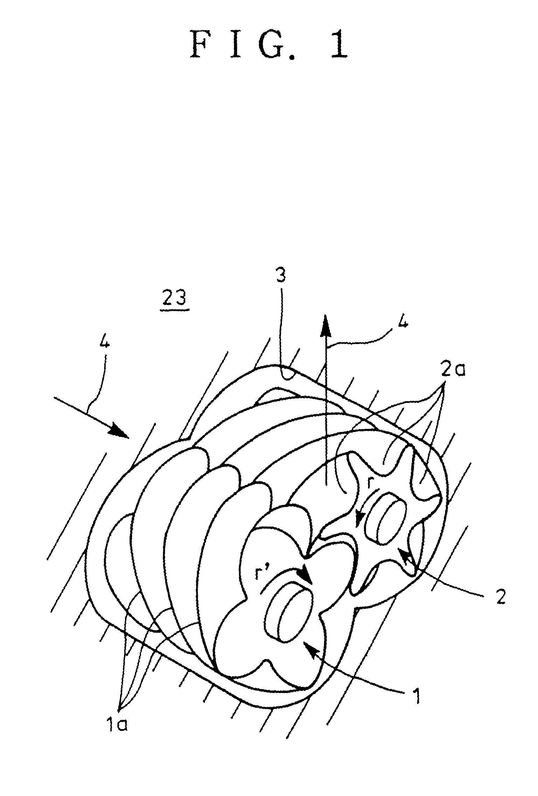

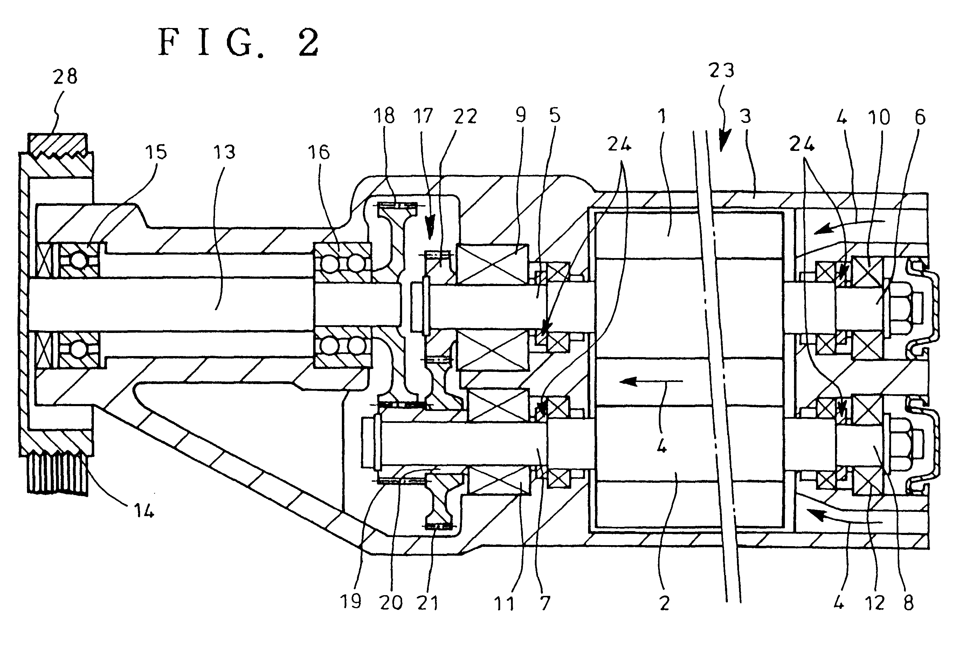

The compressor 23 comprises a male rotor 1 with helical crests 1a on its periphery and a female rotor 2 with helical valleys 2a on its periphery for meshing with the crests 1a of the rotor 1. The rotors 1 and 2 mesh with each other and are rotatably accommodated in a casing 3. The rotors 1 and 2 are rotated in the directions of the arrows r and r', respectively, in Figure 1 to suck air 4 into one axial end of the compressor. The air 4 is then compressed between the rotors 1 and 2 and is discharged from the other axial end of the compressor in a direction perpendicular to the axis. As shown in Figure 2, the rotors 1 and 2 are supported at their respective shafts 5, 6 and 7, 8, respectively, which project from opposite axial ends of the rotors 1 and 2, by the casing 3 via bearings 9, 10 and 11, 12, respectively.

An input shaft 13 is arranged in the casing 3 at the end opposite to the air suction side, i.e. on the left in Figure 2, and a pulley 14 for the compressor is arranged on the outer end of the input shaft 13.

The input shaft 13 is rotatably supported at its outer end on the pulley 14 by a bearing 15 and at its inner end in the casing 3 by a bearing 16.

Interposed between the inner end of the input shaft 13 and the shafts 5 and 7 is a speed increasing device 17 which comprises a speed increasing gear 18 fixed to the inner end of the input shaft 13, a speed increasing pinion 19 fixed to the shaft 7 of the rotor 2 and meshing with the gear 18, a female-rotor timing gear 21 fixed to a boss 20 of the pinion 19 and a male-rotor timing gear 22 fixed to the shaft 5 of the rotor 1 and meshing with the gear 21.

Lubricant is filled in the speed increasing device 17 and in a space on the right in Figure 2 surrounding the shafts 6 and 8. In order to prevent leakage of the lubricant toward the rotors 1 and 2, respective sealing devices 24 are provided between the rotor 1 and the bearings 9 and 10 of the shafts 5 and 6 and between the rotor 2 and the bearings 11 and 12 of the shafts 7 and 8.

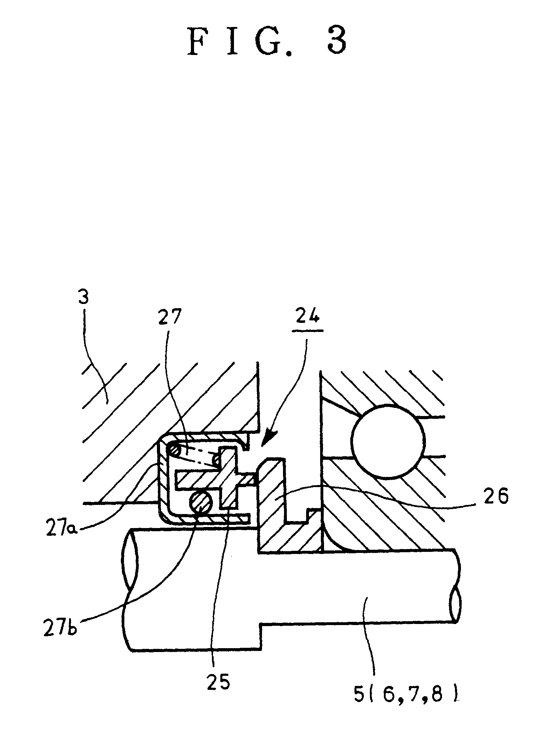

Figure 3 is an enlarged cross-sectional view of a known sealing device 24 comprising a sealing ring 25 and a maintaining ring 26 arranged peripherally of the shaft 5, 6, 7 or 8. The sealing ring 25 is non-rotatably supported in the casing 3 and the maintaining ring 26 is rotatably supported on the shaft 5, 6, 7 or 8. The sealing ring 25 is fitted in a U-shaped cassette case 27a and sealed thereto by means of an O-ring 27b. The sealing ring 25 is pressed against the maintaining ring 26 by a spring 27 to produce complete sealing at the contact surface between the rings 25 and 26, thereby preventing oil leakage.

The sealing ring 25 is made of sintered carbon. The pressing surface of the seal ring 25 is polished to have a fine surface roughness of less than about 0.8 Z and is pressed against the maintaining ring 26 which is made of metal and which is polished to similar degree of surface roughness, thereby assuring full sealing between the rings 25 and 26. "Z" represents the roughness on the basis of 10-points mean roughness $R_z$ (see ISO 468-1982).

The pulley 14 shown in Figure 2 is coupled to an output shaft of an engine via a belt 28 so as to transmit rotation of the output shaft of the engine to the input shaft 13.

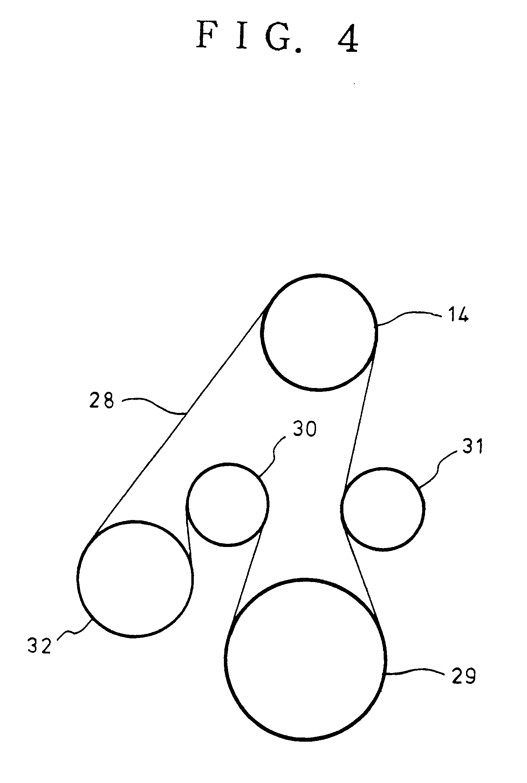

As shown in Figure 4, the belt 28 is connected to a crank pulley 29 fixed to the output shaft of the engine, and tension is applied to the belt 28 by a tensioner 30. Rotation of the output shaft of the engine is transmitted to the pulley 14 as well as further pulleys 31 and 32 provided for other auxiliaries or accessories.

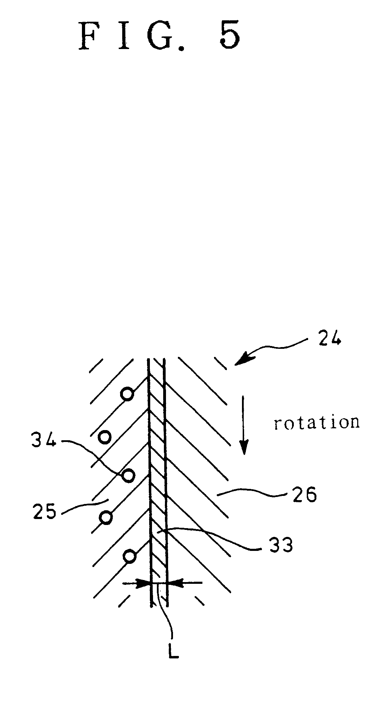

When the sealing ring 25 in Figure 3 is provided with a smooth surface with a surface roughness of less than about 0.8 Z, an oil film 33 is formed, as shown in Figure 5, between the non-rotating sealing ring 25 and the rotating maintaining ring 26. This oil film 33 provides a minute gap L of about 5 μm between the surfaces of the rings 25 and 26, thereby precluding oil leakage.

As already explained in connection with Figure 4, the crank pulley 29 is rotated by the output shaft of the engine. The rotational speed of the engine tends to change suddenly. When the rotational speed of the maintaining ring 26 is suddenly increased via the belt 28, input shaft 13 and speed increasing device 17, a high shear force is suddenly applied to the finely polished or mirror-finish surface of the sealing ring 25 by the oil film 33 shown in Figure 5. Pores 34 present within the carbon sealing ring 25 may then cause cracking and these cracks may propagate through the sealing ring.

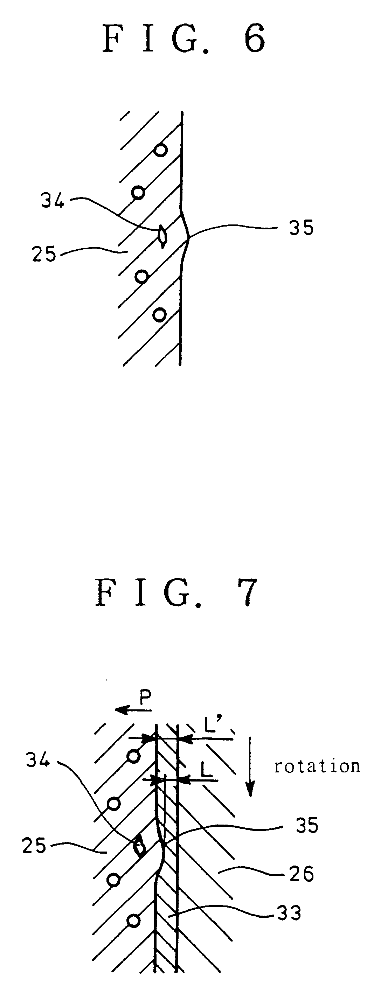

As a result, a swelling known as a blister 35 may occur on the surface of the sealing ring 25, as shown in Figure 6.

When the blister 35 is formed on the surface of the sealing ring 25, the ring 25 is pressed by bounce of the oil film 33 in a direction away from the maintaining ring 26, as shown by the arrow P in Figure 7. As a result, the distance between the surfaces of the rings 25 and 26 is increased to a value L' such that the distance L from the top of the blister 35 to the surface of the maintaining ring 26 is about 5 μm. This leads to oil leakage and deterioration of the sealing effect.

It is therefore an object of the present invention to provide a sealing device for a Lysholm compressor which prevents the occurrence of blisters in order to maintain and enhance the sealing effect.

In accordance with the present invention, a sealing device for a Lysholm compressor of the type including a carbon sealing ring and a metal maintaining ring which, in use, extends around a shaft of a rotor of the compressor and rotates relatively to the sealing ring, the sealing ring being adapted to be pressed against the maintaining ring to achieve a seal, is characterised in that the square root of the sum of the square of the surface roughness of the sealing ring and the square of the surface roughness of the maintaining ring is in the range of 0.8 to 2.5 Z. It is found that if this value is maintained within the specified range no blistering of the surface of the sealing ring occurs and the amount of oil which leaks past the sealing device is maintained below the permissible value.

The invention also embraces a Lysholm compressor including meshing male and female rotors with respective shafts at their ends, at least one and preferably all of the shafts including a sealing device of the type referred to above, the maintaining ring extending around the shaft and being connected to rotate with it and being in sliding contact with the stationary sealing ring to achieve a seal.

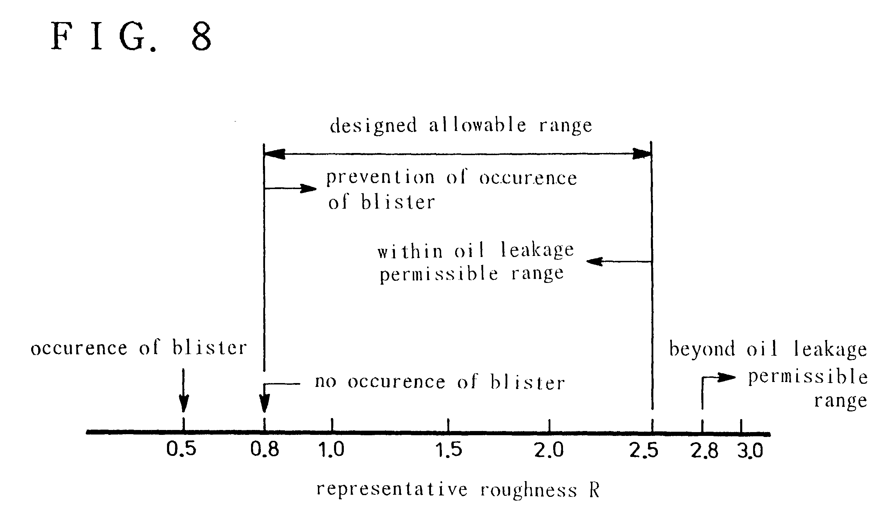

One embodiment of the present will now be described with reference to Figures 8 to 11 of the accompanying drawings, in which:

Figure 8 is a diagram serving as the basis of the present invention, showing the results of tests on the relationship between the representative roughness of the sealing and maintaining rings and the occurrence of a blister and oil leakage;

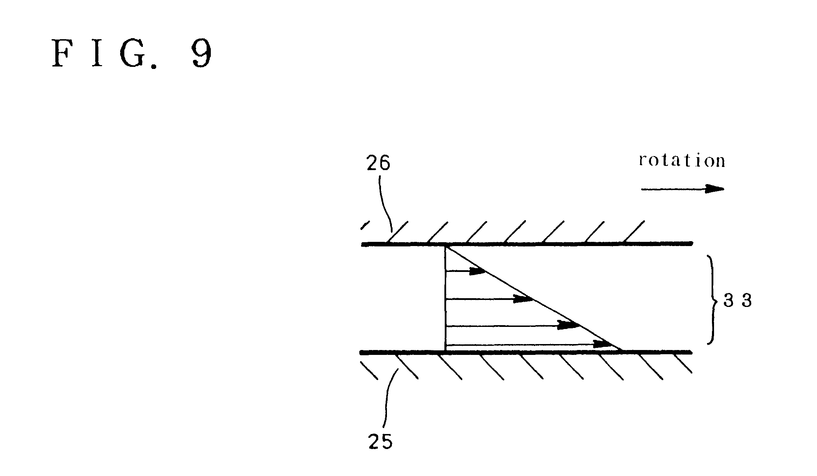

Figure 9 is an enlarged cross-sectional view showing the shear force on a mirror-finish surface when the representative roughness of the conventional sealing and maintaining rings is low;

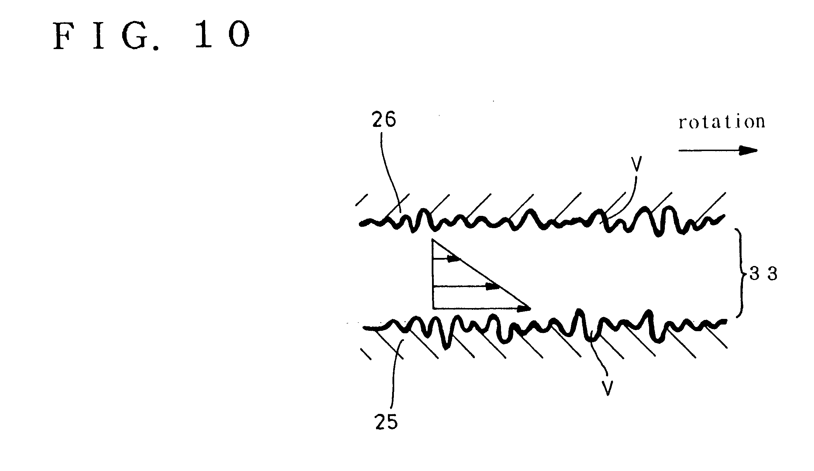

Figure 10 is an enlarged cross-sectional view showing the shear force in the case when the representative roughness is high; and

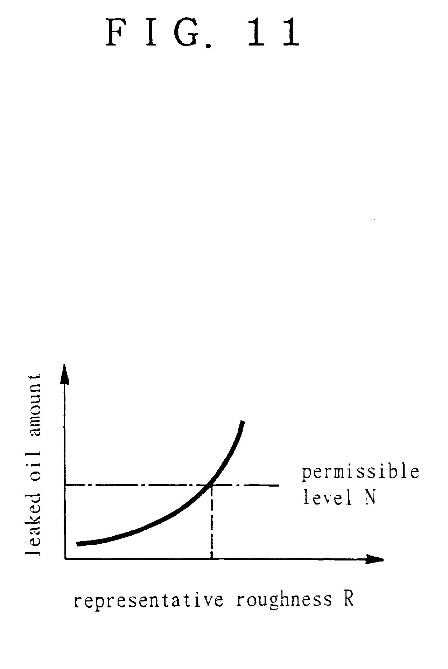

Figure 11 is a graph showing the relationship between the representative roughness and leaked oil amount.

In a manner similar to the sealing device 24 shown in Figures 2, 3 and 5, the sealing device of the present invention comprises a sintered carbon sealing ring 25 and a metal maintaining ring 26 arranged peripherally of a shaft 5, 6, 7 or 8. The sealing ring 25 is non-rotatably supported in the casing 3 of the compressor and the maintaining ring 26 is rotatably supported by the shaft 5, 6, 7 or 8. The sealing ring 25 is pressed against the maintaining ring 26 by a spring 27, and an oil film is formed between the sealing ring 25 and the maintaining ring 26 to achieve sealing and to prevent oil leakage.

Conventionally, the sealing ring 25 and the maintaining ring 26 are thoroughly polished to attain a fine surface roughness of less than about 0.8 Z but in the present invention the square root of the sum of the square of the surface roughness of the sealing ring 25 and the square of the surface roughness of the maintaining ring 26 is in the range of 0.8 to 2.5 Z.

More specifically, if the surface roughness of the sealing ring 25 is $R_{S/R}$ and the surface roughness of the maintaining ring 26 is $R_{M/R}$, the representative roughness R is given by the following equation (1). The results of tests, in which the representative roughness R is varied to ascertain its effect on the occurrence of blisters and oil leakage, are shown in Figure 8.

$$R = \sqrt{(R_{S/R})^2 + (R_{M/R})^2} \qquad (1)$$

In the tests whose results are shown in Figure 8, ordinary engine oil of 10W-20 to 10W-40 was used as the lubricant oil. A plurality of tests were performed at normal temperature (20°C) and at -35°C, assuming severe conditions.

In the case where the representative roughness R was set at 0.5 Z, the occurrence of blisters was noted. When the representative roughness being set at 0.8 Z or more, no blisters occurred. Therefore, according to the present invention, the representative roughness R is set at 0.8 Z or more to prevent the occurrence of blisters.

When the representative roughness R was set at 2.8 Z or more, the permissible level for oil leakage under practical use conditions in the market was exceeded. When the representative roughness was set at 2.5 Z or less, the oil leakage was reduced to below the permissible level. Accordingly, in the present invention, the representative roughness R is set at 2.5 Z or less to ensure that the oil leakage is in the permissible range.

When the representative roughness R of the seal ring 25 (stationary side) and maintaining ring 26 (rotating side) is set at less than about 0.8 Z, as in the case of the prior art, by polishing them to have mirror-finish surfaces, it is evident from the shear distribution shown by the arrows in Figure 9 that the shearing force reaches its maximum value on the surface of the sealing ring 25 on the stationary side if the rotational speed of the maintaining ring 26 on the rotating side is suddenly increased. This shearing force may cause pressure concentrations at minute pores in the sealing ring 25, resulting in local destruction which is propagated to generate blisters, thereby swelling the surface.

By contrast, when the representative roughness of the sealing ring 25 and maintaining ring 26 is set at 0.8 Z or more, the shear force due co the oil is lower than that in the case of the mirror-finish rings shown in Figure 9 since the thickness of the oil film 33 becomes discontinuous or variable, as shown in Figure 10, and oil is trapped in V-shaped valleys V on the surfaces, thereby suppressing the occurrence of blisters.

However, if the representative roughness R is set too high, the oil film 33 becomes too thick in some areas at which the sealing ring 25 and the maintaining ring 26 are thus separated by too great a distance, which may lead to the oil leakage exceeding the permissible range. Figure 11 shows the relationship between representative roughness R of the sealing ring 25 and maintaining ring 26 and the amount of oil which leaks. It is evident from this diagram that the oil leakage increases at an increasing rate as the representative roughness R increases beyond the stipulated range.

However, as mentioned above, the oil leakage can be suppressed to a value below the permissible level N by setting the representative roughness R at 2.5 Z or less. When the representative roughness R is set at 2.5 Z or less, the exhaust gases can be controlled to be within the emissions regulation limits for automobiles or the like even if the oil leaking to the rotors penetrates into the engine.

## Claims

1. A sealing device (24) for a Lysholm compressor including a carbon sealing ring (25) and a metal maintaining ring (26) which, in use, extends around a shaft of a rotor of the compressor and rotates relatively to the sealing ring (25), the sealing ring (25) being adapted to be pressed against the maintaining ring (26) to achieve a seal, **characterised in that** the square root of the sum of the square of the surface roughness of the sealing ring (25) and the square of the surface roughness of the maintaining ring (26) is in the range of 0.8 to 2.5 Z.

2. A Lysholm compressor including meshing male and female rotors (1, 2) with respective shafts (5, 6, 7, 8) at their ends, **characterised in that** at least one and preferably each shaft includes a sealing device (24) as claimed in Claim 1, the maintaining ring (26) extending around the shaft and being connected to rotate with it and being in sliding contact with the stationary sealing ring (25) to achieve a seal.

## Patentansprüche

1. Abdichtung (24) für einen Schraubenverdichter mit einem Kohlenstoffabdichtungsring (25) und einem Metallhaltering (26), der im Gebrauch sich um eine Welle eines Rotors des Verdichters erstreckt und sich relativ zum Abdichtungsring (25) dreht, wobei der Abdichtungsring (25) gegen den Haltering (26) zur Erzielung einer Abdichtung gedrückt werden kann,
   **dadurch gekennzeichnet,**
   **daß** die Quadratwurzel der Summe des Quadrates der Oberflächenrauhigkeit des Abdichtungsringes (25) und des Quadrates der Oberflächenrauhigkeit des Halterings (26) in dem Bereich von 0,8 bis 2,5 Z liegt.

2. Schraubenverdichter mit einem eingreifenden Rotor (1) und einem aufnehmenden Rotor (2), die miteinander kämmen und zugehörige Wellen (5, 6, 7, 8) an ihren Enden haben,
   **dadurch gekennzeichnet,**
   **daß** mindestens eine und vorzugsweise jede Welle eine Abdichtung (24) nach Anspruch 1 aufweist, wobei der Haltering (26) sich um die Welle erstreckt und derart verbunden ist, daß er sich mit ihr dreht und in Gleitkontakt mit dem stationären Abdichtungsring (25) zur Erzielung einer Abdichtung steht.

## Revendications

1. Dispositif d'étanchéité (24) destiné à un compresseur à vis comprenant un anneau d'étanchéité de carbone (25) et un anneau de maintien de métal (26) qui, en utilisation, s'étend autour d'un arbre d'un rotor du compresseur et tourne par rapport à l'anneau d'étanchéité (25), l'anneau d'étanchéité (25) étant conçu pour être pressé contre l'anneau de maintien (26) afin d'obtenir un joint, **caractérisé en ce que** la racine carrée de la somme du carré de la rugosité de surface de l'anneau d'étanchéité (25) et du carré de la rugosité de surface de l'anneau de maintien (26) se trouve dans la plage de 0,8 à 2,5 Z.

2. Compresseur à vis comprenant des rotors mâle et femelle s'engrenant (1, 2) avec des arbres respectifs (5, 6, 7, 8) au niveau de leurs extrémités, **caractérisé en ce qu'**au moins un arbre et de préférence chaque arbre comprend un dispositif d'étanchéité (24) selon la revendication 1, l'anneau de maintien (26) s'étendant autour de l'arbre et étant relié afin de tourner avec celui-ci et étant en contact coulissant avec l'anneau d'étanchéité fixe (25) afin d'obtenir un joint.

# F I G. 1

FIG. 2

# F I G. 3

# F I G. 4

# F I G. 5

# F I G.  6

# F I G.  7

# F I G. 8

designed allowable range

prevention of occurence of blister

within oil leakage permissible range

occurence of blister

no occurence of blister

beyond oil leakage permissible range

0.5  0.8  1.0  1.5  2.0  2.5  2.8  3.0

representative roughness R

EP 0 803 667 B1

EP 0 803 667 B1

# F I G. 9

26

25

rotation

3 3

FIG. 10

26

rotation

33

25

EP 0 803 667 B1

# F I G. 1 1

leaked oil amount

permissible
level N

representative roughness R